Europäisches Patentamt

European Patent Office

Office européen des brevets

(19)

(11) **EP 0 607 385 B1**

(12) ## EUROPÄISCHE PATENTSCHRIFT

(45) Veröffentlichungstag und Bekanntmachung des Hinweises auf die Patenterteilung:
**16.04.1997 Patentblatt 1997/16**

(21) Anmeldenummer: **93915678.2**

(22) Anmeldetag: **31.07.1993**

(51) Int Cl.⁶: **G01N 27/407**

(86) Internationale Anmeldenummer:
**PCT/DE93/00674**

(87) Internationale Veröffentlichungsnummer:
**WO 94/04911 (03.03.1994 Gazette 1994/06)**

(54) **POLAROGRAPHISCHER SENSOR**

POLAROGRAPHIC SENSOR

DETECTEUR POLAROGRAPHIQUE

(84) Benannte Vertragsstaaten:
**DE FR GB IT**

(30) Priorität: **11.08.1992 DE 4226540**

(43) Veröffentlichungstag der Anmeldung:
**27.07.1994 Patentblatt 1994/30**

(73) Patentinhaber: **ROBERT BOSCH GMBH**
**70442 Stuttgart (DE)**

(72) Erfinder:
• **FRIESE, Karl-Hermann**
**D-7250 Leonberg (DE)**

• **HERMANN, Dietz**
**D-7016 Gerlingen (DE)**
• **GRÜNWALD, Werner**
**D-7016 Gerlingen (DE)**

(56) Entgegenhaltungen:
| | |
|---|---|
| EP-A- 0 019 731 | EP-A- 0 020 938 |
| EP-A- 0 152 942 | EP-A- 0 259 175 |
| WO-A-90/04171 | DE-A- 3 021 745 |
| DE-A- 3 108 305 | DE-A- 3 744 206 |

**Beschreibung**

Stand der Technik

Es ist bekannt, daß sich die Konzentration bestimmter Komponenten in Gasgemischen mittels polarographischer Sensoren bestimmen läßt. Das geschieht beispielsweise bei Abgasen von Verbrennungsmotoren, die mit gasförmigen oder flüssigen Kraftstoffen betrieben werden, wie Otto- oder Dieselmotore. Es ist erwünscht, den Gehalt des Abgases an Sauerstoff und bzw. oder an verbrennbaren Komponenten, wie Wasserstoff, Kohlenwasserstoffen und Kohlenmonoxid, zu kennen, weil diese Werte Rückschlüsse auf den Betriebszustand des Motors gestatten, d.h. ermöglichen, zwischen einer Betriebsweise mit "mageren" oder "fetten" Luft/Kraftstoff-Gemischen zu unterscheiden.

Die Kenntnis des Betriebszustandes ist die Grundlage für regelnde Eingriffe mit dem Ziel, die Zusammensetzung des Luft/Treibstoff-Gemisches jeweils zu optimieren. In mageren Luft/Treibstoff-Gemischen ist Sauerstoff im stöchiometrischen Überschuß vorhanden, und im Abgas werden dementsprechend erhebliche Konzentrationen an Sauerstoff gemessen, während verbrennbare Komponenten allenfalls in untergeordneter Menge auftreten. Umgekehrt ist es, wenn der Motor mit fetten Luft/ Treibstoff-Gemischen betrieben wird. Dann sind im Abgas noch erhebliche Mengen an verbrennbaren Komponenten vorhanden, während Sauerstoff allenfalls in untergeordneter Konzentration auftritt. Eine Maßzahl zur Unterscheidung zwischen mageren und fetten Gemischen ist die Lambda($\lambda$)-Zahl, das Aequivalentverhältnis von Sauerstoff zu verbrennbaren Anteilen. Sie ist >1 in mageren Gemischen, <1 in fetten Gemischen und =1, wenn Sauerstoff und verbrennbare Komponenten im stöchiometrischen Verhältnis vorliegen, was im allgemeinen angestrebt wird.

Polarographische Sonden beruhen auf der Messung des Grenzstromes einer Pumpzelle. Für Messungen von Sauerstoff in Abgasen aus mageren Gemischen ("mageren Abgasen") wird vor der Kathode eine Diffusionsbarriere angeordnet, die es dem Sauerstoff so sehr erschwert, zur Kathode zu gelangen, daß auch bei nur mäßiger Pumpspannung der gesamte molekulare Sauerstoff praktisch unverzüglich zu $O^{2-}$-Ionen reduziert wird, die durch den Elektrolyten wandern und an der Anode wieder als molekularer Sauerstoff entladen werden. Die Stromstärke läßt sich durch höhere Pumpspannung nicht mehr vergrößern; es fließt ein Grenzstrom, dessen Stärke praktisch nur von der Sauerstoffkonzentration im Abgas und von der Charakteristik der Diffusionsbarriere, insbesondere von deren Schichtdicke und Porösität, abhängt. Eicht man die Sonde mit Referenzgasen, so läßt sich ein eindeutiger Zusammenhang zwischen der Stärke des Grenzstromes und der Sauerstoffkonzentration herstellen.

Bei Abgasen von fetten Luft/Kraftstoff-Gemischen ("fetten Abgasen") werden die darin in erheblicher Menge enthaltenen verbrennbaren Anteile anodisch oxidiert. Auch dabei kann man einen konzentrationsabhängigen Grenzstrom messen, wenn man die Diffusion der verbrennbaren Anteile zur Anode behindert. Bei herkömmlichen Meßsonden kann das erreicht werden, indem man die Pumpzelle umpolt, d.h. Anode und Kathode vertauscht. Es ist also nur eine Diffusionsbarriere vor einer der Elektroden vorhanden, die bei Messungen in mageren Gasen als Kathode, bei Messungen in fetten Gasen als Anode geschaltet ist. Es ist ein Nachteil dieser Sonden, daß sie zur fett/mager-Unterscheidung umgepolt werden müssen, denn dies erfordert zusätzlichen Meß- und Regelaufwand. Zudem arbeiten die Sonden unmittelbar nach einem Umschaltvorgang nicht zuverlässig, weil sich erst nach gewisser Zeit ein stationärer Zustand an den umgepolten Elektroden einstellt.

Aus EP-B1-0 194 082 ist ein Sensor mit zwei Zellen bekannt geworden, der folgende Elemente aufweist :

(a) Eine Pumpzelle mit einem ersten festen Elektrolyten und, daran angebracht, einer ersten und einer zweiten porösen Elektrode,

(b) eine "elektrochemische Fühlzelle" mit einem zweiten festen Elektrolyten sowie einer dritten und vierten Elektrode, wobei die dritte Elektrode in der Nähe der ersten Elektrode der Pumpzelle angebracht ist,

(c) einen Diffusionswiderstand, der dem Meßgas den Zutritt zur ersten und zur dritten Elektrode erschwert,

(d) eine Einrichtung zum Anlegen eines Pumpstroms zwischen der ersten und der zweiten Elektrode der Pumpzelle,

(e) eine Einrichtung zur Messung der Potentialdifferenz (oder elektromotorischen Kraft) zwischen der dritten und der vierten Elektrode der "elektrochemischen Fühlzelle" und schließlich

(f) eine Einrichtung zum Anlegen eines Hilfspumpstroms zwischen der dritten Elektrode der "elektrochemischen Fühlzelle" und einer anderen Elektrode.

Dieser kompliziert aufgebaute Sensor gibt also (siehe Merkmal (e)) ein potentiometrisch ermitteltes Steuersignal ab. Zudem erfordert der Übergang zwischen fett und mager eine Elektrodenumpolung, mit den zuvor beschriebenen Nachteilen.

Aus EP-A-0 019 731 ist ein Sensor bekannt, bei welchem die Kathode der Pumpzelle mit einer Diffusionsbarriere versehen ist.

## Vorteile der Erfindung

Die Nachteile der Sensoren nach dem Stand der Technik werden vermieden durch die polarographischen Sensoren mit den Merkmalen der nachfolgenden Patentansprüche 1 und 2 bei Verwendung für den im Patentanspruch 3 aufgeführten Zweck. Sie benötigen nur zwei bzw. drei Anschlüsse für die elektrische Auswertung der Signale und sind auch sonst einfach und zweckmäßig aufgebaut. Sie reagieren unverzüglich auf Veränderungen der Zusammensetzung des Abgases und arbeiten zuverlässig in den für die Abgasmessung bei Verbrennungsmotoren üblichen Temperaturbereichen. Die Ausführungsform nach dem Patentanspruch 2 eignet sich als Breitbandsensor, d.h. zur Messung sowohl im fetten als auch im mageren Bereich. Eine Elektrodenumkehr beim Übergang zwischen fetten und mageren Abgasen ist nicht erforderlich, was die elektrische Auswerteschaltung vereinfacht. Ein weiterer Vorteil der Sensoren nach der Erfindung liegen darin, daß sie in zuverlässiger, einheitlicher Technologie, z.B. in Siebdrucktechnik in einfacher Weise hergestellt werden können.

## Zeichnungen

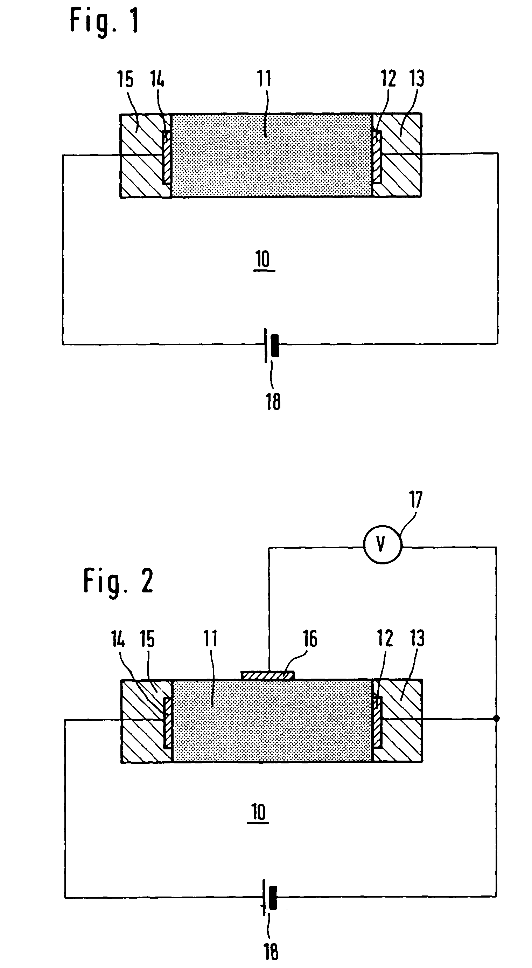

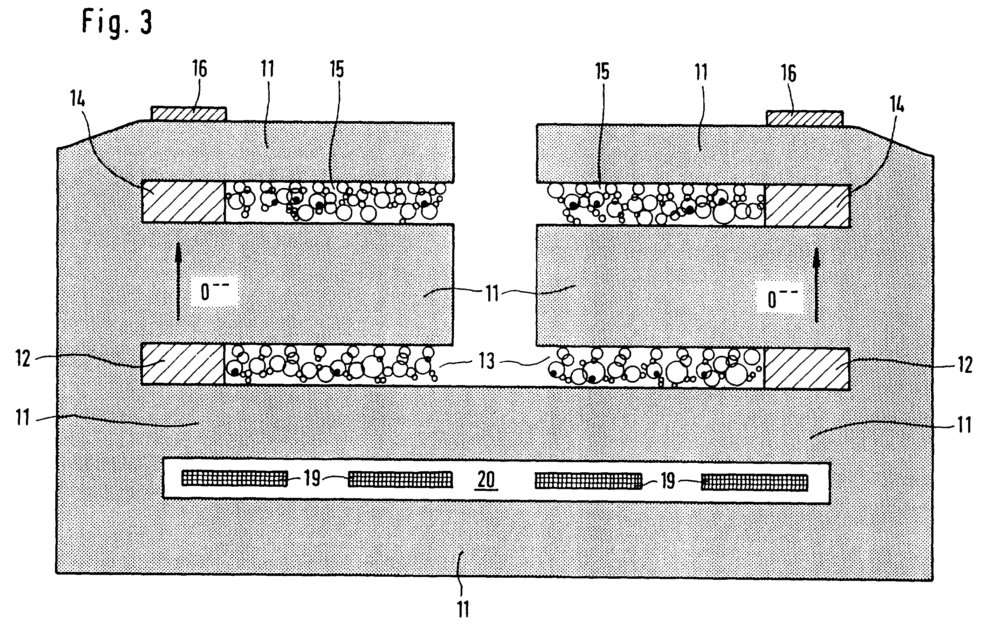

Die Figuren 1 bis 3 zeigen verschiedene Ausführungsformen der polarographischen Sensoren nach der Erfindung, die in der nachfolgenden Beschreibung näher erläutert werden. Figur 1 zeigt das Prinzip eines Sensors, der sich vorzugsweise zur Regelung von Motoren eignet, die im Regelfall im Magerbetrieb ($\lambda$>1) arbeiten, z.B. von Dieselmotoren. Figur 2 gibt das Prinzip eines Breitbandsensors wieder, der sowohl im mageren als auch im fetten Bereich einsetzbar ist. Figur 3 zeigt eine reale Ausführungsform eines Sensors nach dem Prinzip der Figur 2 im Querschnitt.

## Beschreibung der Erfindung

Mit den polarographischen Sensoren nach der Erfindung lassen sich die Konzentrationen von Sauerstoff und von verbrennbaren Anteilen, wie Kohlenwasserstoffen, Wasserstoff und insbesondere Kohlenmonoxid, im Abgas von Verbrennungsmotoren bestimmen. Dies geschieht durch Messung des Grenzstromes einer Pumpzelle. Man setzt die üblichen Pumpzellen ein, die als Elektrolyt vorzugsweise Zirkondioxid, gegebenenfalls dotiert mit anderen Metalloxiden, wie Yttriumoxid, Magnesiumoxid und Ytterbiumoxid, enthalten. Zirkonoxid und dessen Gemische mit den erwähnten Metalloxiden zeigen bei Temperaturen ab etwa 300°C Ionenleitfähigkeit für Sauerstoff. Die Sensoren nach der Erfindung werden dementsprechend vorteilhaft bei Temperaturen zwischen etwa 450 und 800°C betrieben. Kathode und Anode bestehen aus den üblichen, zumeist katalytisch wirksamen metallischen Materialien, z.B. aus Platin.

Es ist ein wichtiges Merkmal der Sensoren nach der Erfindung, daß sowohl die Kathode als auch die Anode mit einer Diffusionsbarriere versehen sind. Die Diffusionsbarriere an der Kathode behindert oder verzögert bei Abgasen von Luft/Kraftstoff-Gemischen mit >1 (mageren Abgasen) den Zutritt von Sauerstoff zur Kathode. Dadurch stellt sich schon bei mäßiger Pumpspannung von <1 V, beispielsweise von 0,8 V, ein (kathodischer) Grenzstrom ein, entsprechend den Gleichungen

$$O_2 + 4e \rightarrow 2\,O^{2-} \qquad \text{(Kathode)}$$

$$2\,O^{2-} \rightarrow O_2 + 4e \qquad \text{(Anode)}$$

Die Diffusionsbarriere an der Anode erschwert den Zutritt von verbrennbaren Anteilen, wie Kohlenwasserstoffen, Wasserstoff und insbesondere Kohlenmonoxid, zur Anode, wenn der Verbrennungsmotor mit Luft/Kraftstoff-Gemischen mit $\lambda$<1 betrieben wird, d.h. fette Abgase erzeugt werden. Auf diese Weise entsteht eine (anodischer) Grenzstrom, entsprechend den Gleichungen

$$CO_2 + 2e \rightarrow CO + O^{2-} \qquad \text{(Kathode)}$$

$$CO + O^{2-} \rightarrow CO_2 + 2e \qquad \text{(Anode)}$$

Voraussetzung für die Entstehung eines anodischen Grenzstromes ist, daß die Konzentration der oxidierbaren Bestandteile Kohlenmonoxid, Wasserstoff und Kohlenwasserstoffe wesentlich kleiner ist als diejenige der reduzierbaren Bestandteile Wasser und Kohlendioxid. Das ist jedoch in Abgasen von Verbrennungsmotoren immer der Fall.

Figur 1 zeigt das Prinzip eines polarographischen Sensors nach Patentanspruch 1. Die Pumpzelle 10 weist den Elektrolyten 11 sowie die Kathode 12 mit der Diffusionsbarriere 13 und die Anode 14 mit der Diffusionsbarriere 15 auf. Die Gleichstromquelle 18 liefert die erforderliche Pumpspannung von in der Regel etwa 1 V. Ein solcher Sensor eignet sich besonders zur Verwendung für die Regelung von Motoren, die im Regelfall im mageren Bereich betrieben werden, wie das bei Dieselmotoren der Fall ist. Bei Vollastbetrieb von Dieselmotoren kann es jedoch vorkommen, daß die Grenze $\lambda$ = 1 erreicht oder ungewollt kurzfristig unterschritten wird. Bei herkömmlichen Mager-Grenzstromsonden tritt im Bereich fetter Abgase ein starker Stromanstieg auf, der die Regelung veranlaßt, die Zusammensetzung des Luft/Kraftstoff-Gemisches zu noch niedrigeren $\lambda$-Werten, d.h. weiter in Richtung auf noch fettere Gemische, zu verändern. Dadurch kommt es zu einer starken Rußbildung im Abgas. Ursache des starken Stromanstiegs ist die Potentialeinstellung (oder Polarisation) an den Elektroden 12 und 14. Im fetten Abgas wird an der Anode nicht mehr Sauerstoff entwickelt, sondern wie oben beschrieben (mit geringer Überspannung) Kohlenmonoxid zu Kohlendioxid oxidiert. Das Potential der Kathode wird dabei in Bereiche abgesenkt, in denen im Zirkondioxid bereits Elektronenleitfähigkeit auftritt. Dies verursacht den starken Stromanstieg, sobald der Punkt $\lambda = 1$ unterschritten wird. Die erfindungsgemäße Diffusionsbarriere 15 verhindert das Absinken des Kathodenpotentials. An der Anode stellt sich ein Grenzstrom der anodischen Kohlenmonoxid-Oxidation ein, der den größten Teil der angelegten Betriebsspannung beansprucht. Die Kathode kommt somit nicht in den Bereich erheblicher Elektronenleitfähigkeit, der erwähnte starke Stromanstieg findet nicht statt. Auf diese Weise verhindert die Diffusionsbarriere 15 bei einer Magersonde eine Fehlregelung bei Erreichen und ungewolltem Unterschreiten des $\lambda = 1$-Punktes.

Eine Anordnung nach dem Prinzip der Figur 2 eignet sich vorzugsweise als Breitbandsensor, also zur Regelung von Verbrennungsmotoren, die nach Wunsch sowohl im mageren als auch im fetten Breich betrieben werden können. Sie unterscheidet sich von dem Sensor nach Figur 1 dadurch, daß eine unbelastete Bezugselektrode 16 vorgesehen ist, die vorzugsweise auf dem Elektrolyten 11 angeordnet wird. Die Bezugselektrode dient der Unterscheidung von fetten und mageren Abgasen. Die konstante Pumpspannung U, mit der der Sensor betrieben wird, verteilt sich auf die Polarisation der Anode $P_A$, die Polarisation der Kathode $P_K$ und auf den Ohmschen Spannungsabfall IR im Elektrolyten :

$$U = P_A + P_K + IR$$

Das letzte Glied ist wegen der hohen Leitfähigkeit des Elektrolyten 11 bei den hohen Betriebstemperaturen von etwa 500 bis etwa 800°C praktisch zu vernachlässigen.

Im Falle eines Grenzstromes ist die Polarisation an der für den Grenzstrom maßgeblichen Elektrode größer als an der grenzstromfreien Gegenelektrode. Im mageren Abgas ist dementsprechend $P_K > P_A$, da ein kathodischer Grenzstrom auftritt. Im fetten Abgas ist dagegen $P_A > P_K$, da dann der Grenzstrom an der Anode den Stromfluß bestimmt. Mißt man die Elektrodenpolarisation gegen die unbelastete Bezugselektrode 16 mittels des Spannungsmessers 17, so bedeutet eine hohe Bezugsspannung der Kathode 12, daß ein kathodischer, durch Sauerstoffdiffusion bestimmter Grenzstrom und somit ein mageres Abgas vorliegt. Eine geringe Bezugsspannung der Kathode zur Bezugselektrode zeigt dagegen einen anodischen, durch die Diffusion verbrennbarer Anteile bestimmten kathodischen Grenzstrom und damit ein fettes Abgas an. Umgekehrt liegen die Verhältnisse, wenn man, anders als in Figur 2 dargestellt, die Bezugsspannungen zwischen der Anode 14 und der Bezugselektrode 16 mißt. Dann erkennt man einen kathodischen Grenzstrom (mageres Abgas) an einer geringen und einen anodischen Grenzstrom (fettes Abgas) an einer hohen Bezugsspannung der Anode 14. Bei $\lambda = 1$ ist der Stromfluß praktisch Null, und die Zellenspannung verteilt sich etwa gleichmäßig auf die Elektrodenpolarisationen $P_A$ und $P_K$.

Figur 3 stellt eine reale Ausführungsform eines Breitbandsensors nach der Erfindung im Querschnitt dar. Alle Elemente sind in den zuammenhängenden, wenn auch gegebenenfalls in mehreren Arbeitsgängen erzeugten Elektrolyten 11 eingebettet. Die Kathode 12 und die Anode 14 sind zweckmäßig ringförmig ausgebildet, die zugehörigen Diffusionsbarrieren 13 und 15 sind flache zylindrische Diffusionsspalte, die mit üblichen porösen keramischen Massen gefüllt sind, die den Zutritt der betreffenden Gase zu den Elektroden 12 und 14 behindern. Im Meßgas liegt die Bezugselektrode 16, die ebenfalls ringförmig sein, aber auch beliebige andere Formen aufweisen kann. Der Heizer 19, der durch die Isolierung 20 vom Elektrolyten 20 getrennt ist, heizt den Elektrolyten auf die optimalen Betriebstemperaturen von etwa 700 bis etwa 800°C auf. Bezugselektrode 16 und Kathode 12 (oder Anode 16) sind mit einem Spannungsmesser verbunden, der nicht dargestellt ist. Ebenfalls nicht dargestellt ist die Stromquelle 18, die die Pumpspannung liefert.

**Patentansprüche**

1. Polarographischer Sensor zur Bestimmung der Konzentration bestimmter Bestandteile im Abgas von Verbrennungsmotoren, mit einer Pumpzelle (10), deren Kathode (12) mit einer Diffusionsbarriere (13) versehen ist, dadurch gekennzeichnet, daß die Anode (14) ebenfalls mit einer Diffusionsbarriere (15) versehen ist.

2. Polarographischer Sensor nach Anspruch 1, gekennzeichnet durch eine unbelastete Bezugselektrode (16) im Meßgas zur Messung der Polarisation mindestens einer der Elektroden gegen diese Bezugselektrode.

3. Verwendung der polarographischen Sensoren nach den Ansprüchen 1 oder 2 zur Regelung des Verhältnisses der Bestandteile des den Verbrennungsmotoren zugeführten Luft/Kraftstoff-Gemisches.

**Claims**

1. Polarographic sensor for determining the concentration of certain components in the exhaust gas of internal-combustion engines, which comprises a pump cell (10) whose cathode (12) is provided with a diffusion barrier (13), characterized in that the anode (14) is likewise provided with a diffusion barrier (15).

2. Polarographic sensor according to Claim 1, characterized by an unloaded reference electrode (16) in the gas to be analysed, for measuring the polarization of at least one of the electrodes with respect to said reference electrode.

3. Use of the polarographic sensors according to Claim 1 or 2 for regulating the ratio of the components of the air-fuel mix supplied to the internal-combustion engines.

**Revendications**

1. Capteur polarographique pour déterminer la concentration de certains composants dans les gaz d'échappement de moteurs à combustion interne, comprenant une cellule de pompage (17) dont la cathode (12) est munie d'une barrière de diffusion (13)
caractérisé en ce que
l'anode (14) est également munie d'une barrière de diffusion (15).

2. Capteur polarographique selon la revendication 1 caractérisé par une électrode (16), non chargée placée dans le gaz de mesure pour mesurer la polarisation d'au moins l'une des électrode par rapport à cette électrode de référence.

3. Applications des capteurs polarographiques selon les revendications 1 ou 2 pour réguler le rapport des composants des mélanges air/carburant alimentant les moteurs à combustion interne.

# Fig. 1

15  14          11                    12  13

10

18

# Fig. 2

17

V

14  15     11        16        12  13

10

18

Fig. 3